# EUROPÄISCHE PATENTSCHRIFT

(11) **EP 2 190 890 B1**
(45) Veröffentlichungstag und Bekanntmachung des Hinweises auf die Patenterteilung: **06.07.2011**
(21) Anmeldenummer: 08803856.7
(22) Anmeldetag: 09.09.2008
(51) Int. Cl.: C08F 218/08, C08F 218/12, C09J 131/04

(54) **HERSTELLUNG VON VINYLACETAT-VINYLESTER-MISCHPOLYMERISATEN MIT GERINGEM GEHALT AN HOCHSIEDENDEN VINYLESTERN**
PRODUCTION OF VINYL ACETATE-VINYL ESTER COPOLYMERS HAVING A LOW CONTENT OF HIGH-BOILING VINYL ESTERS
PRODUCTION DE COPOLYMÈRES D'ACÉTATE DE VINYLE-ESTER DE VINYLE PRÉSENTANT UNE TENEUR RÉDUITE EN ESTERS DE VINYLE À HAUT POINT D'ÉBULLITION

(30) Priorität: 19.09.2007 DE 102007044788
(43) Veröffentlichungstag der Anmeldung: 02.06.2010
(73) Patentinhaber: Wacker Chemie AG, 81737 München (DE)
(72) Erfinder: KÖHLER, Thomas, 84556 Kastl (DE)
(74) Vertreter: Schuderer, Michael
(86) Internationale Anmeldenummer: PCT/EP2008/061888
(87) Internationale Veröffentlichungsnummer: WO 2009/037142

(56) Entgegenhaltungen:
- DE-A1- 1 940 479
- DE-A1- 2 752 102
- DE-A1- 10 035 588
- DE-A1- 10 215 961
- ANONYMOUS: "ZUSAMMENSETZUNGEN (COMPOUNDS) AUS POLYVINYLACETATUND VINYLACETAT-COPOLYMERISAT" INTERNET CITATION, [Online] Seiten 1-15, XP002486166 Gefunden im Internet: URL:https://priorart.ip.com/download/IPCOM 000149681D/IPCOM000149681D.pdf> [gefunden am 2008-06-27]

## Beschreibung

Die Erfindung betrifft ein Verfahren zur Herstellung von Vinylacetat-Vinylester-Mischpolymerisaten mit geringem Gehalt an hochsiedenden Vinylestern, sowie die Verwendung der mit dem Verfahren erhältlichen Vinylacetat-Vinylester-Mischpolymerisate.

Vinylacetat-Vinylester-Mischpolymerisate in Form von Festharzen sind durch radikalisch initiierte Copolymerisation von Vinylacetat und Vinylestern nach dem Masse- oder Lösungspolymerisationsverfahren zugänglich. Allerdings werden insbesondere bei entsprechenden Copolymerisationen mit einem Anteil an hochsiedenden Vinylestern von ≥ 20 Gew.-%, bezogen auf das Gesamtgewicht der Monomere, Vinylacetat-Vinylester-Mischpolymerisate mit hohen Gehalten an nichtpolymerisierten hochsiedenden Vinylestern erhalten. Dies ist aber bei der Anwendung von Vinylacetat-Vinylester-Mischpolymerisaten, wie beispielsweise als Bestandteil in Beschichtungsmitteln, von Nachteil, da die nichtpolymerisierten hochsiedenden Vinylester eine Verschlechterung der Hafteigenschaften oder Oberflächendefekte (pinholes) von Beschichtungen bewirken können bzw. an die Oberfläche von Beschichtungen migrieren können, was zu schmierigen Oberflächen führt. Des Weiteren sind hochsiedende Vinylester flüchtige organische Substanzen (VOC-Substanzen, volatile organic compounds), die aus Anwendungsprodukten an die Umgebung abgegeben werden können und auf diese Weise die Gesundheit sowie die Umwelt belasten. Gemäß Definition der Weltgesundheitsorganisation haben VOC-Substanzen bei Atmosphärendruck einen Siedebereich von 60 bis 250°C. Zu den VOC-Substanzen zählen z.B. Verbindungen aus den Stoffgruppen der Alkane, Alkene, Aromaten, Terpene, Halogenkohlenwasserstoffe, Ester, Aldehyde oder Ketone. Beispiele für hochsiedende, flüchtige Vinylester sind Vinyllaurat (Sdp. 254°C/1013 hPa) oder Vinylester von α-verzweigten Carbonsäuren wie VeoVa9^{R} (Sdp. 185-200°C/1013 hPa) oder VeoVa10^{R} (Sdp. 244-247°C/1013 hPa) (beides Handelsnamen der Firma Hexion).

Der Gehalt an nichtpolymerisierten Monomeren (Restmonomere) in Vinylacetat-Vinylester-Mischpolymerisaten kann beispielsweise verringert werden, indem die Restmonomere aus den Mischpolymerisaten abdestilliert werden, wie beispielsweise in der DE-A 102007015941 beschrieben. In der DE-A 10215961 wird empfohlen, entsprechende Destillationen unter Einsatz von Schleppmitteln, wie Isopropanol oder Wasser, durchzuführen (Strippen) DE-A-1940479 beschreibt ein Verfahren zur Herstellung von Vinylacetat-Vinylester-Mischpolymerisaten mit geringem Gehalt an hochsiedenden Vinylestern durch radikalisch initiierte Polymerisation von 50 Gew.-% Vinylacetat, 50 Gew.-% von einem oder mehreren hochsiedenden Vinylestern (Vinyllaurat), dadurch gekennzeichnet, dass zusätzlich 5 Gew.-% Vinylacetat bei einer Umsatzrate der Polymerisation von 80 % zugegeben werden. Aber beschreibt DE-A-1940479 keine Nachpolymerisation. Alternativ können Vinylacetat-Vinylester-Mischpolymerisate einer Nachpolymerisation unterzogen werden, unter Zugabe von weiteren Mengen an Initiator, wodurch der Gehalt an Restmonomeren verringert wird.

Nachteilig ist hierbei, dass die Nachpolymerisation bzw. das Strippen die Gesamtzeit (Zykluszeit) für die Herstellung von Vinylacetat-Vinylester-Mischpolymerisaten ausgehend von den entsprechenden Monomeren deutlich verlängert und dennoch keine Vinylacetat-Vinylester-Mischpolymerisate mit Gehalten an hochsiedenden Restmonomeren von deutlich unter 1000 ppm zugänglich machen. Die Entfernung von Restmonomeren mittels Destillation oder Strippen ist insbesondere dann erschwert bzw. nicht möglich, wenn es sich um hochsiedende Monomere, wie beispielsweise um hochsiedende Vinylester, handelt. Auch zur Entfernung von Restmonomeren durch Strippen ist eine gewisse Flüchtigkeit der nichtpolymerisierten Monomere erforderlich. Insbesondere bei der Herstellung von Vinylacetat-Vinylester-Mischpolymerisaten im technischen Maßstab ist eine ausreichende Abtrennung hochsiedender Restmonomere mittels Destillation oder Strippen auf keine wirtschaftliche Weise möglich. Nachpolymerisation ist mit dem Nachteil verbunden, dass als Nebenreaktion eine Vernetzung oder Pfropfung der Vinylacetat-Vinylester-Mischpolymerisate auftritt, wodurch die Eigenschaften der Produkte, wie beispielsweise deren Viskosität, beeinträchtigt werden. Derartige Nebenreaktionen treten insbesondere dann auf, wenn mehrere Nachpolymerisationen nacheinander durchgeführt werden.

Es bestand daher die Aufgabe, Verfahren zur Herstellung von Vinylacetat-Vinylester-Mischpolymerisaten mit geringem Gehalt an hochsiedenden Vinylestern bereit zu stellen, bei denen die oben genannten Nachteile nicht auftreten.

Gegenstand der Erfindung sind Verfahren zur Herstellung von Vinylacetat-Vinylester-Mischpolymerisaten mit einem Gehalt von ≤ 1.000 ppm an hochsiedenden Vinylestern mit einem Siedepunkt von ≥ 150°C bei 1013 hPa durch radikalisch initiierte Polymerisation von
4,9 bis 95 Gew.-% Vinylacetat,
4,9 bis 95 Gew.-% von einem oder mehreren hochsiedenden Vinylestern, sowie gegebenenfalls
0,1 bis 40 Gew.-% von einem oder mehreren ethylenisch ungesättigten Hilfsmonomeren, dadurch gekennzeichnet, dass zusätzlich
0,1 bis 40 Gew.-% Vinylacetat bei einer Umsatzrate der Polymerisation von 65 bis 99,9 % zugegeben werden,
und der Gehalt an nichtpolymerisierten hochsiedenden Vinylestern in den vinylacetat-Vinylester-Mischpolymerisaten durch Nachpolymerisation verringert wird,
indem Initiator, gegebenenfalls gelöst in Vinylacetat oder in einem oder mehreren ethylenisch ungesättigten Hilfsmonomeren oder in einem oder mehreren Lösungsmitteln zugegeben und auf 40°C bis 200°C erwärmt wird,
wobei sich die Angaben in Gew.-% jeweils auf das Gesamtgewicht der Monomere beziehen und sich jeweils auf 100 Gew.-% aufaddieren.

Ein geringer Gehalt an hochsiedenden Vinylestern bedeutet, dass die Vinylacetat-Vinylester-Mischpolymerisate einen Gehalt an hochsiedenden Vinylestern von bevorzugt von ≤ 500 ppm, besonders bevorzugt von ≤200 ppm, ganz besonders bevorzugt von ≤ 100 ppm und am meisten bevorzugt von ≤ 50 ppm haben.

Die hochsiedenden Vinylester haben erfindungsgemäß einen Siedepunkt von vorzugsweise ≥ 175°C bei 1013 hPa, am meisten bevorzugt von ≥ 200°C bei 1013 hPa.

Bevorzugte hochsiedende Vinylester sind Vinylester von linearen Monocarbonsäuren mit 5 bis zu 20 C-Atomen oder Vinylester von alpha-verzweigten Monocarbonsäuren mit 5 bis 20 C-Atomen. Beispiele für bevorzugte hochsiedende Vinylester sind Vinyllaurat, Vinylstearat und Vinylneodecanoat. Ein besonders bevorzugter hochsiedender Vinylester ist Vinyllaurat.

Der Anteil der hochsiedenden Vinylester-Einheiten an den Vinylacetat-Vinylester-Mischpolymerisaten beträgt vorzugsweise 20 bis 80 Gew.-%, besonders bevorzugt 40 bis 80 Ges.-% und am meisten bevorzugt 50 bis 80 Gew.-%, bezogen auf die Gesamtmasse der Vinylacetat-Vinylester-Mischpolymerisate.

Der Anteil der Vinylacetat-Einheiten an den Vinylacetat-Vinylester-Mischpolymerisaten beträgt vorzugsweise 20 bis 80 Gew.-%, besonders bevorzugt 20 bis 60 Gew.-% und am meisten bevorzugt 20 bis 50 Gew.-%, bezogen auf die Gesamtmasse der Vinylacetat-Vinylester-Mischpolymerisate.

Ethylenisch ungesättigte Hilfsmonomere umfassen von Vinylacetat und den hochsiedenden Vinylestern verschiedene Vinylester von Carbonsäuren mit 1 bis 15 C-Atomen. Bevorzugte ethylenisch ungesättigte Hilfsmonomere sind Vinylpropionat, Vinylbutyrat, Vinyl-2-ethylhexanoat, 1-Methylvinylacetat und Vinylpivalat.

Ethylenisch ungesättigte Hilfsmonomere umfassen auch ein oder mehrere Monomere aus der Gruppe umfassend Acrylsäureester und Methacrylsäureester von unverzweigten oder verzweigten Alkoholen mit 1 bis 15 C-Atomen, Vinylaromaten, und Vinylhalogenide. Besonders bevorzugte Acrylsäureester oder Methacrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat, Isobornylacrylat, Stearylacrylat. Am meisten bevorzugte Acrylsäureester oder Methacrylsäureester sind Methylacrylat, Methylmethacrylat, n-, iso- und t-Butylacrylat, 2-Ethylhexylacrylat und Isobornylacrylat. Als Vinylaromaten können Styrol oder Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Ethylenisch ungesättigte Hilfsmonomere umfassen auch Olefine und Diene, wie beispielsweise Ethen und Propen; ethylenisch ungesättigte Mono- und Dicarbonsäuren oder deren Salze, wie beispielsweise Acrylsäure, Methacrylsäure, Crotonsäure, Fumarsäure und Maleinsäure; ethylenisch ungesättigte Anhydride, wie beispielsweise Maleinsäureanhydrid; Mono- oder Diester der Fumarsäure oder der Maleinsäure, wie beispielsweise deren Ethyl- oder Isopropylester; ethylenisch ungesättigte Epoxide, wie beispielsweise Glycidylacrylat, Glycidylmethacrylat (GMA) oder Allylglycidylether; ethylenisch ungesättigte Sulfonsäuren oder deren Salze, wie beispielsweise Vinylsulfonsäure, 2-Acrylamido-2-methylpropansulfonsäure; ethylenisch ungesättigte Alkohole, wie beispielsweise 2-Hydroxyethylacrylat, Hydroxypropylacrylat, 2-Hydroxyethylmethacrylat, Hydroxypropylmethacrylat, oder Glycerin-1-allylether; ethylenisch ungesättigte primäre, sekundäre oder tertiäre Amine, wie beispielsweise 2-Dimethylaminoethylmethacrylat, 2-tert. Butylaminoethylmethacrylat, Allyl-N-(2-aminoethyl)-carbamat-hydrochlorid, Allyl-N-(6-aminohexyl)-carbamat-hydrochlorid, Allyl-N-(3-aminopropyl)-hydrochlorid, Allylamin oder Vinylpyridin; ethylenisch ungesättigte Amide, wie beispielsweise 3-Dimethylaminopropylmethacrylamid, 3-Trimetylammoniumpropylmethacrylamidchlorid; Phosphonsäuren oder deren Salze, wie beispielsweise Vinylphosphonsäure, SIPOMER PAM-100^{R} oder SIPOMER-200^{R} (Handelsnamen der Firma Rhodia).

Bevorzugte ethylenisch ungesättigte Hilfsmonomere sind auch Acrylsäure, Crotonsäure, Fumarsäure, Maleinsäure, Glycidylmethacrylat (GMA), 2-Hydroxyethylacrylat, und Hydroxypropylacrylat.

Die Herstellung der Vinylacetat-Vinylester-Mischpolymerisate erfolgt nach dem Masse- und bevorzugt nach dem Lösungspolymerisations-Verfahren. Geeignete Lösungsmittel sind beispielsweise Aldehyde, wie Acetaldehyd, Propionaldehyd und Butyraldehyd; Ketone, wie Aceton oder Methylethylketon; Ester, wie Methylacetat, Ethylacetat und Butylacetat oder einwertige, aliphatische Alkohole mit 1 bis 6 C-Atomen, vorzugsweise Methanol, Ethanol, Propanol, Isopropanol. Besonders bevorzugt werden Ethylacetat, Methanol und Isopropanol.

Die Polymerisation wird im Allgemeinen unter Rückflussbedingungen, im Allgemeinen bei einer Polymerisationstemperatur von 40°C bis 160°C, durchgeführt. Dies kann bei Normaldruck, Überdruck oder Unterdruck erfolgen. Bei der Copolymerisation von gasförmigen Comonomeren wie Ethylen kann auch bei höheren Drücken, im Allgemeinen bei 5 bis 150 bar gearbeitet werden. Wenn die Reaktion unter Normaldruck durchgeführt wird, ist es von Vorteil am Ende der Reaktion einen leichten Überdruck auf das Reaktionssystem zu geben, vorzugsweise 0.5 bis 3 bar, um dem System von außen Energie zuführen zu können, um so einen möglichst hohe Temperatur und einen hohem Umsatz zu erreichen, und um das Abdestillieren des restlichen Monomeren und des Lösungsmittels möglicht effektiv zu gestalten.

Als Initiatoren werden organische Peroxide oder Azoverbindungen verwendet. Geeignet sind beispielsweise Diacylperoxide wie Dilauroylperoxid, Peroxoester wie t-Butylperoxopivalat oder t-Butylperoxo-2-ethylhexanoat, oder Peroxodicarbonate wie Diethylperoxodicarbonat. Die Initiatormenge beträgt im Allgemeinen von 0.01 bis 5.0 Gew.-%, bezogen auf das Gesamtgewicht der Monomere. Die Initiatoren können sowohl vorgelegt als auch dosiert werden. Dabei hat es sich bewährt, einen Teil der benötigten Initiatormenge vorzulegen und den Rest kontinuierlich während der Reaktion zu dosieren.

Zur Herstellung der Vinylacetat-Vinylester-Mischpolymerisate kann nach einem Batch-Verfahren gearbeitet werden, wobei alle Komponenten des Polymerisationsansatzes, bis auf die Vinylacetat-Nachdosierung, im Reaktor vorgelegt werden, oder nach einem Semi-Batch-Verfahren, wobei einzelne oder mehrere Komponenten vorgelegt werden und der Rest zudosiert wird, oder eine kontinuierliche Polymerisation durchgeführt werden, wobei die Komponenten während der Polymerisation zudosiert werden. Die Dosierungen können gegebenenfalls separat (räumlich und zeitlich) durchgeführt werden.

Wesentlich für die Durchführung des erfindungsgemäßen Verfahrens ist, dass bei einer Umsatzrate der Polymerisation von 65 bis 99,9 %, das heißt wenn mindestens 65 Gew.-% (Untergrenze) und maximal 99,9 % (Obergrenze) der bis zu dem jeweiligen Zeitpunkt zugegebenen Monomermenge copolymerisiert ist, ein Anteil von Vinylacetat nachdosiert wird (Vinylacetat-Nachdosierung), der 0,1 bis 40 Gew.-% des Gesamtgewichts der insgesamt eingesetzten Monomere entspricht. Die Vinylacetat-Nachdosierung erfolgt vorzugsweise bei einer Untergrenze der Umsatzrate der Polymerisation von ≥ 70 %, besonders bevorzugt von ≥ 80 %, ganz besonders bevorzugt von ≥ 90% und am meisten bevorzugt von ≥ 92 % und bei einer Obergrenze von vorzugsweise ≤ 99,5 %, besonders bevorzugt von ≤ 99 %, noch mehr bevorzugt von ≤ 97 % und am meisten bevorzugt von ≤ 95 %. Die Vinylacetat-Nachdosierung beträgt vorzugsweise 1 bis 20 Gew.-%, besonders bevorzugt 1 bis 10 Gew.-%, bezogen auf das Gesamtgewicht der insgesamt eingesetzten Monomere. Die Vinylacetat-Nachdosierung kann diskontinuierlich oder kontinuierlich erfolgen.

Die Polymerisation wird im Allgemeinen bei einem Umsatz von 95 bis 99,9 % abgebrochen, bezogen auf das Gesamtgewicht der insgesamt eingesetzten Monomere. Der Gehalt der nichtpolymerisierten hochsiedenden Vinylester im Polymerisationsprodukt beträgt zu diesem Zeitpunkt vorzugsweise 10 bis 10.000 ppm.

Nach Abschluss der Polymerisation werden Restmonomere und das Lösungsmittel destillativ entfernt. Hierzu kann die Innentemperatur bis auf 100°C bis 200°C erhöht und anschließend ein Vakuum angelegt werden.

Zur Verringerung des Gehalts an nichtpolymerisierten hochsiedenden Vinylestern oder sonstigen Restmonomeren in den Vinylacetat-Vinylester-Mischpolymerisaten wird nachpolymerisiert. Hierzu wird Initiator, gegebenenfalls gelöst in Vinylacetat oder in einem oder mehreren ethylenisch ungesättigten Hilfsmonomeren oder in einem oder mehreren Lösungsmitteln zugegeben und auf 40°C bis 200°C erwärmt. Hierbei sind die oben genannten Initiatoren und die für die Lösungspolymerisation genannten Lösungsmittel geeignet. Vorzugsweise wird die Nachpolymerisation in Gegenwart von Vinylacetat durchgeführt. Anschließend werden gegebenenfalls vorhandene Lösungsmittel bzw. Restmonomere bei 100°C bis 200°C, vorzugsweise im Vakuum, abdestilliert. Vorzugsweise wird 1 bis 3 Mal nachpolymerisiert. Besonders bevorzugt wird 1 Mal nachpolymerisiert. Die im Zuge der Nachpolymerisation gegebenenfalls zugegebene Menge an Vinylacetat wird nicht von der Vinylacetat-Nachdosierung umfasst.

Der Gehalt an nichtpolymerisierten hochsiedenden Vinylestern in den Vinylacetat-Vinylester-Mischpolymerisaten beträgt nach diesen Maßnahmen vorzugsweise < 500 ppm, besonders bevorzugt ≤ 200 ppm und am meisten bevorzugt ≤ 50 ppm.

Der Gehalt an Restmonomeren in den Vinylacetat-Vinylester-Mischpolymerisaten kann durch ein- oder mehrfaches Strippen weiter verringert werden. Dazu werden den Vinylacetat-Vinylester-Mischpolymerisaten ein oder mehrere Schleppmittel zugesetzt, die anschließend vorzugsweise bei 100°C bis 200°C, vorzugsweise im Vakuum, abdestilliert werden. Bevorzugte Schleppmittel sind Isopropanol oder Wasser. Durch das Strippen werden vorwiegend Vinylacetat oder niedrig siedende Restmonomere abdestilliert. Vorzugsweise wird bis zu 2 Mal oder bis zu 3 Mal gestrippt. Um nach dem erfindungsgemäßen Verfahren Vinylacetat-Vinylester-Mischpolymerisate mit geringen Gehalten an hochsiedenden Vinylestern zu erhalten, ist aber kein Strippen erforderlich.

Die Vinylacetat-Vinylester-Mischpolymerisate eignen sich beispielsweise zur Verwendung als Bindemittel in Lacken, zur Herstellung von Klebemitteln, insbesondere von heißsiegelbaren Beschichtungen, sowie von Kaschiermitteln. Weitere Anwendungsgebiete sind der Einsatz als Grundstoffe für Appreturen und Kaugummimassen sowie als Low-Profile-Additive im Bereich der Komposit-Bauteile. Die Vinylacetat-Vinylester-Mischpolymerisate können hierzu in fester Form als Festharze oder in Form von Lösungen in organischen Lösungsmitteln eingesetzt werden.

Die nachfolgenden Beispiele dienen zur weiteren Erläuterung der Erfindung:

### Vergleichsbeispiel 1 (V1):

In einem Rührkessel wurden 1,7 kg Isopropanol, 11 kg Vinylacetat, 16 kg Vinyllaurat und 10 g t-Butylperoxo-2-ethylhexanoat vorgelegt und die Polymerisation durch Aufheizen auf 78°C initiiert. Nach Initiierung der Polymerisation wurde für 360 Minuten gerührt, währenddessen die Temperatur auf 89°C erhöht wurde. Anschließend wurde der Rührkessel auf 140°C erhitzt, und Lösungsmittel sowie Restmonomere wurden im Vakuum abdestilliert. Zur Nachpolymerisation wurden 30 g Di-t-butylperoxybutan gelöst in 0,2 kg Vinylacetat zugegeben, und es wurde für 60 Minuten bei 140°C gerührt. Anschließend wurden die flüchtigen Bestandteile im Vakuum während 2 Stunden abdestilliert. Die Gesamtdauer der Nachpolymerisation betrug 3 Stunden. Zum Entfernen weiterer Spuren an flüchtigen organischen Substanzen wurde ein Liter Wasser zugesetzt und anschließend während 2 Stunden im Vakuum abdestilliert. Dieser Schritt wurde noch einmal wiederholt (insgesamt 2 Strippschritte).

Ablassen der so erhaltenen Schmelze aus dem Rührkessel in Kartons führte zu einem transparenten Festharz mit einer Glasübergangstemperatur Tg von -21°C, einem Molekulargewicht Mw von 511.000 g/mol und einem Gehalt an dem hochsiedenden Vinylester Vinyllaurat von 5.700 ppm.

### Vergleichsbeispiel 2 (V2):

In einem Rührkessel wurden 1,7 kg Isopropanol, 11 kg Vinylacetat, 16 kg Vinyllaurat und 10 g t-Butylperoxo-2-ethylhexanoat vorgelegt und die Polymerisation durch Aufheizen auf 78°C initiiert. Nach Initiierung der Polymerisation wurde für 360 Minuten gerührt, währenddessen die Temperatur auf 89°C erhöht wurde. Anschließend wurde der Rührkessel auf 140°C erhitzt, und Lösungsmittel sowie Restmonomer wurden im Vakuum abdestilliert. Zur Nachpolymerisation wurden 30 g Di-t-butylperoxybutan gelöst in 0,2 kg Vinylacetat zugegeben und für 60 Minuten bei 140°C gerührt. Anschließend wurden die flüchtigen Bestandteile im Vakuum während 2 Stunden abdestilliert. Die Gesamtdauer einer Nachpolymerisation betrug 3 Stunden. Die Nachpolymerisation wurde insgesamt 3 Mal durchgeführt. Zum Entfernen weiterer Spuren an flüchtigen organischen Substanzen wurde ein Liter Wasser zugesetzt und anschließend während 2 Stunden im Vakuum abdestilliert. Dieser Schritt wurde noch einmal wiederholt (insgesamt 2 Strippschritte).

Ablassen der so erhaltenen Schmelze aus dem Rührkessel in Kartons führte zu einem transparenten Festharz mit einer Glasübergangstemperatur Tg von -18°C, einem Molekulargewicht Mw von 480.000 g/mol und einem Gehalt an dem hochsiedenden Vinylester Vinyllaurat von 2.150 ppm.

### Beispiel 3 (B3):

In einem Rührkessel wurden 1,7 kg Isopropanol, 9 kg Vinylacetat, 16 kg Vinyllaurat und 10 g t-Butylperoxo-2-ethylhexanoat vorgelegt und die Polymerisation durch Aufheizen auf 78°C initiiert. 240 Minuten nach der Initiierung wurden bei einer Umsatzrate der Monomere von 80 % 2 kg Vinylacetat während 5 Minuten nachdosiert. Es wurde für 120 Minuten gerührt, währenddessen die Temperatur auf 92°C erhöht wurde. Anschließend wurde auf 140°C erhitzt, und Lösungsmittel sowie Restmonomer wurden im Vakuum abdestilliert. Zur Nachpolymerisation wurden 30 g Di-t-butylperoxybutan gelöst in 0,2 kg Vinylacetat zugegeben und für 60 Minuten bei 140°C gerührt. Anschließend wurden die flüchtigen Bestandteile während 2 Stunden unter Vakuum abdestilliert. Die Nachpolymerisation wurde noch 2 Mal wiederholt. Zum Entfernen weiterer Spuren an flüchtigen organischen Substanzen wurde ein Liter Wasser zugesetzt und während 2 Stunden im Vakuum abdestilliert. Dieser Schritt wurde noch einmal wiederholt (insgesamt 2 Strippschritte).

Ablassen der so erhaltenen Schmelze aus dem Rührkessel in Kartons führte zu einem transparenten Festharz mit einer Glasübergangstemperatur Tg von -18°C, einem Molekulargewicht Mw von 481.000 g/mol und einem Gehalt an dem hochsiedenden Vinylester Vinyllaurat von 26 ppm.

### Beispiel 4 (B4):

In einem Rührkessel wurden 1,7 kg Isopropanol, 9 kg Vinylacetat, 16 kg Vinyllaurat und 10 g t-Butylperoxo-2-ethylhexanoat vorgelegt und die Polymerisation durch Aufheizen auf 78°C initiiert. 240 Minuten nach der Initiierung wurden bei einer Umsatzrate der Monomere von 80 % 2 kg Vinylacetat während 5 Minuten nachdosiert. Es wurde noch für 120 Minuten gerührt, währenddessen die Temperatur auf 92°C erhöht wurde. Anschließend wurde auf 140°C erhitzt, und Lösungsmittel sowie Restmonomer wurden im Vakuum abdestilliert. Zur Nachpolymerisation wurden 30 g Di-t-butylperoxybutan gelöst in 0,2 kg Vinylacetat zugegeben und für 60 Minuten bei 140°C gerührt. Anschließend wurden die flüchtigen Bestandteile während 2 Stunden im Vakuum abdestilliert. Auf das Entfernen weiterer Spuren an flüchtigen organischen Substanzen durch Strippen wurde verzichtet.

Ablassen der so erhaltenen Schmelze aus dem Rührkessel in Kartons führte zu einem transparenten Festharz mit einer Glasübergangstemperatur Tg von -16°C, einem Molekulargewicht Mw von 424.000 g/mol und einem Gehalt an dem hochsiedenden Vinylester Vinyllaurat von 142 ppm.

Beispiel 6 (B6), Beispiel 8 (B8), Beispiele 10 bis 12 (B10 bis B12) wurden analog zu Beispiel 3 bzw. 4 durchgeführt, und Vergleichsbeispiel 5 (V5), Vergleichsbeispiel 7 (V7), Vergleichsbeispiel 9 (V9) sowie die Vergleichsbeispiele 13 bis 15 (V13 bis V15) wurden analog zu Vergleichsbeispiel 1 bzw. 2 durchgeführt, wobei die Monomere, deren Anteil an der jeweiligen Monomerzusammensetzung sowie weitere Verfahrensparameter entsprechend den in der Tabelle 1 gemachten Angaben zur Anwendung kamen. Bei den durch Tabelle 1 beschriebenen Polymerisationen wurde jeweils soviel Vinylacetat eingesetzt, dass sich die Mengen an hochsiedenden Vinylestern und Vinylacetat insgesamt zu 100 Gew.-% addieren.

**Tabelle 1: Verfahrensparameter sowie Restmonomergehalte der Vinylacetat-Vinylester-Mischpolymerisate der Beispiele und Vergleichsbeispiele:**

| | hochsiedender Vinylester^{a)} ([Gew.-%]) | VAC^{a)} - Nachdosierung [Gew.-%] | NP^{b)} | Strippschritte [Anzahl] | Restmonomer-Gehalt^{a),c)} [ppm] |
|---|---|---|---|---|---|
| V1 | VL (60) | - | 1 | 2 | 5.700 |
| V2 | VL (60) | - | 3 | 2 | 2.150 |
| B3 | VL (60) | 7,5 | 3 | 2 | 26 |
| B4 | VL (60) | 7,5 | 1 | - | 142 |
| V5 | VL (40) | - | 3 | 2 | 950 |
| B6 | VL (40) | 7,5 | 1 | - | 85 |
| V7 | VL (20) | - | 1 | 2 | 850 |
| B8 | VL (20) | 7,5 | 1 | - | 43 |
| V9 | VV9 (40) | - | 2 | - | 1.150 |
| B10 | VV9 (40) | 7,5 | 1 | - | 77 |
| B11 | VV9 (40) | 7,5 | 3 | 2 | 15 |
| B12 | VV10 (40) | 7,5 | 1 | - | 103 |
| V13 | VL (60) | - | - | - | 19.200 |
| V14 | VL (60) | - | - | 1 | 14.300 |
| V15 | VL (60) | - | 1 | - | 11.900 |

| | | | | | |
|---|---|---|---|---|---|
| a) VAc = Vinylacetat, VL = Vinyllaurat, VV9 = VeoVa9^{R}, VV10 = VeoVa10^{R} b)NP: Anzahl der Nachpolymerisationen c) Der Restmonomer-Gehalt bezieht sich hier auf den Gehalt des jeweiligen hochsiedenden Vinylesters im Vinylacetat-Vinylester Mischpolymerisat | | | | | |

Die Vergleichsbeispiele 13 bis 15 belegen, dass zur Verringerung des Gehalts an nichtpolymerisierten hochsiedenden Vinylestern in den Vinylacetat-Vinylester-Mischpolymerisaten die Durchführung einer Nachpolymerisation effektiver ist als Strippen.

Aus Vergleichsbeispiel 1 (V1, Tabelle 1) geht hervor, dass der Gehalt an hochsiedendem Vinylester im Vinylacetat-Vinylester-Mischpolymerisat trotz Nachpolymerisation und zweimaligem Strippen nur auf 5700 ppm abgesenkt werden konnte. Eine Erhöhung der Anzahl der Nachpolymerisationen von 1 (V1, Tabelle 1) auf 3 (V2, Tabelle 1) führte zwar zu einem geringeren, aber immer noch inakzeptabel hohen Gehalt an Vinyllaurat, der sich erfahrungsgemäß auch nicht durch weitere Prozessschritte (Nachpolymerisation, Strippen) auf Werte unter 500 ppm absenken lässt. Somit sind Vinylacetat-Vinylester-Mischpolymerisate mit geringen Gehalten an hochsiedenden Vinylestern auf herkömmliche Weise nicht zugänglich.

Darüberhinaus war die Zyklyszeit durch die zeitaufwändige mehrfache Nachpolymerisation und das mehrfache Strippen in V2 deutlich erhöht. In V2 war der Zeitaufwand zur Verringerung des Gehaltes an hochsiedenden Vinylestern sogar höher als der Zeitaufwand für die Durchführung der Polymerisation. Dies ist aber für eine effektive und kostengünstige Produktion von Vinylacetat-Vinylester-Mischpolymerisaten nicht akzeptabel und führt zu hohen Produktionskosten.

Bei Einsatz des erfindungsgemäßen Verfahrens kann dagegen der Gehalt an hochsiedenden Vinylestern um Größenordnungen auf beispielsweise 26 ppm abgesenkt werden ( Beispiel 3).

Selbst wenn das erfindungsgemäße Verfahren ohne Strippen und mit nur einer Nachpolymerisation durchgeführt wurde (Beispiel 4), verblieb gegenüber den Vergleichsbeispielen 1 und 2 nur ein sehr niedriger Gehalt von Vinyllaurat im Vinylacetat-Vinylester-Mischpolymerisat - und dies zudem bei erheblich verkürzter Zykluszeit.

Aus dem Vergleichsbeispiel 5 und Beispiel 6 bzw. Vergleichsbeispiel 7 und Beispiel 8 ist ersichtlich, dass auch bei der Herstellung von Vinylacetat-Vinylester-Mischpolymerisaten mit niedrigeren Gehalten an Vinyllaurat (40 Gew.% bzw. 20 Gew.% Vinyllaurat, bezogen auf das Gesamtgewicht der Polymerisate) durch das erfindungsgemäße Verfahren eine massive Absenkung des Gehalts von nichtpolymerisiertem Vinyllaurat im Vinylacetat-Vinylester-Mischpolymerisat erreicht werden kann, obwohl beim erfindungsgemäßen Vorgehen (Beispiele 6 bzw. 8) auf zeitaufwändiges Strippen verzichtet wurde. Besonders drastisch ist der erfindungsgemäße Effekt aber bei Herstellung von Vinylacetat-Vinylester-Mischpolymerisaten mit hohen Gehalten an hochsiedenden Vinylestern (Beispiele 3 bzw. 4 und Vergleichsbeispiele 1 bzw. 2).

Die Beispiele 10 bis 12 und Vergleichsbeispiel 9 bestätigen, dass die oben für Vinyllaurat getroffenen Aussagen auch bei Einsatz der im Vergleich zu Vinyllaurat niedrigsiedenden Vinylester VeoVa9^{R} und VeoVa10^{R} zutreffend sind.

## Patentansprüche

1. Verfahren zur Herstellung von Vinylacetat-Vinylester-Mischpolymerisaten mit einem Gehalt von ≤1.000 ppm an hochsiedenden Vinylestern mit einem Siedepunkt von ≥ 150°C bei 1013 hPa durch radikalisch initiierte Polymerisation von
4,9 bis 95 Gew.-% Vinylacetat,
4,9 bis 95 Gew.-% von einem oder mehreren hochsiedenden Vinylestern, sowie gegebenenfalls
0,1 bis 40 Gew.-% von einem oder mehreren ethylenisch ungesättigten Hilfsmonomeren, **dadurch gekennzeichnet, dass** zusätzlich 0,1 bis 40 Gew.-% Vinylacetat bei einer Umsatzrate der Polymerisation von 65 bis 99,9 % zugegeben werden und der Gehalt an nichtpolymerisierten hochsiedenden Vinylestern in den Vinylacetat-Vinylester-Mischpolymerisaten durch Nachpolymerisation verringert wird,
indem Initiator, gegebenenfalls gelöst in Vinylacetat oder in einem oder mehreren ethylenisch ungesättigten Hilfsmonomeren oder in einem oder mehreren Lösungsmitteln zugegeben und auf 40°C bis 200°C erwärmt wird,
wobei sich die Angaben in Gew.-% jeweils auf das Gesamtgewicht der Monomere beziehen und sich jeweils auf 100 Gew.-% aufaddieren.

2. Verfahren nach Anspruch 1, **dadurch gekennzeichnet, dass** der Gehalt an hochsiedenden Vinylestern ≤ 500 ppm beträgt.

3. Verfahren nach Anspruch 1 bis 2, **dadurch gekennzeichnet, dass** die hochsiedenden Vinylester einen Siedepunkt von vorzugsweise ≥ 150°C bei 1013 hPa haben.

4. Verfahren nach Anspruch 1 bis 3, **dadurch gekennzeichnet, dass** als hochsiedende Vinylester Vinylester von linearen Monocarbonsäuren mit bis zu 20 C-Atomen und/oder Vinylester von alpha-verzweigten Monocarbonsäuren mit 5 bis 20 C-Atomen eingesetzt werden.

5. Verfahren nach Anspruch 1 bis 4, **dadurch gekennzeichnet, dass** als hochsiedende Vinylester ein oder mehrere Monomere ausgewählt aus der Gruppe umfassend Vinyllaurat, Vinylstearat, und Vinylneodecanoat, eingesetzt werden.

6. Verfahren nach Anspruch 1 bis 5, **dadurch gekennzeichnet, dass** der Gehalt an Restmonomeren in den Vinylacetat-Vinylester-Mischpolymerisaten durch Destillation oder Strippen verringert wird.

7. Verwendung der Verfahrensprodukte aus Anspruch 1 bis 6 als Bindemittel für Lacke, zur Herstellung von Kaschiermitteln.

8. Verwendung der Verfahrensprodukte aus Anspruch 1 bis 6 als Grundstoffe für Appreturen, Kaugummimassen oder als Low-Profile-Additiv.

## Claims

1. Process for producing vinyl acetate-vinyl ester copolymers having a content of ≤ 1000 ppm of high-boiling vinyl esters having a boiling point of ≥ 150°C at 1013 hPa by radically initiated polymerization of
4.9 to 95% by weight vinyl acetate,
4.9 to 95% by weight of one or more high-boiling vinyl esters, and also, if appropriate,
0.1 to 40% by weight of one or more ethylenically unsaturated auxiliary monomers, **characterized in that** additionally 0.1 to 40% by weight vinyl acetate are added at a conversion rate of the polymerization of 65 to 99.9% and the content of unpolymerized high-boiling vinyl esters in the vinyl acetate-vinyl ester copolymers is decreased by secondary polymerization,
by initiator, if appropriate dissolved in vinyl acetate or in one or more ethylenically unsaturated auxiliary monomers or in one or more solvents, being added and heated to from 40°C to 200°C,
the figures in % by weight in each case relating to the total weight of monomers and respectively totalling 100% by weight.

2. Process according to Claim 1, **characterized in that** the content of high-boiling vinyl esters is ≤ 500 ppm.

3. Process according to Claim 1 to 2, **characterized in that** the high-boiling vinyl esters have a boiling point of preferably 150°C at 1013 hPa.

4. Process according to Claims 1 to 3, **characterized in that** the high-boiling vinyl esters used are vinyl esters of linear monocarboxylic acids having up to 20 carbon atoms and/or vinyl esters of alpha-branched monocarboxylic acids having 5 to 20 carbon atoms.

5. Process according to Claims 1 to 4, **characterized in that** the high-boiling vinyl esters used are one or more monomers selected from the group consisting of vinyl laurate, vinyl stearate and vinyl neodecanoate.

6. Process according to Claims 1 to 5, **characterized in that** the content of residual monomers in the vinyl acetate-vinyl ester copolymers is decreased by distillation or stripping.

7. Use of the process products of Claims 1 to 6 as binders for paints, for producing laminating agents.

8. Use of the process products of Claims 1 to 6 as base materials for fabric finishes, chewing gum mixes or as a low-profile additive.

## Revendications

1. Procédé pour la production de copolymérisats acétate de vinyle/ester vinylique ayant une teneur de ≤ 1 000 ppm en esters vinyliques à haut point d'ébullition, ayant un point d'ébullition de ≥ 150 °C sous 1 013 hPa, par polymérisation à amorçage radicalaire de
4,9 à 95 % en poids d'acétate de vinyle,
4,9 à 95 % en poids d'un ou plusieurs esters vinyliques à haut point d'ébullition, ainsi qu'éventuellement
0,1 à 40 % en poids d'un ou plusieurs monomères auxiliaires à insaturation éthylénique, **caractérisé en ce qu'**à un taux de conversion de la polymérisation de 65 à 99,9 % on ajoute en outre de 0,1 à 40 % en poids d'acétate de vinyle et la teneur en esters vinyliques à haut point d'ébullition non polymérisés des copolymérisats acétate de vinyle/ester vinylique est diminuée par post-polymérisation,
en ajoutant un amorceur, éventuellement dissous dans de l'acétate de vinyle ou dans un ou plusieurs monomères auxiliaires à insaturation éthylénique ou dans un ou plusieurs solvants et en chauffant à une température de 40 °C à 200 °C,
les données en % en poids se rapportant chacune au poids total des monomères et la somme de ces données respectives s'élevant au total à 100 % en poids.

2. Procédé selon la revendication 1, **caractérisé en ce que** la teneur en esters vinyliques à haut point d'ébullition vaut ≤ 500 ppm.

3. Procédé selon les revendications 1 à 2, **caractérisé en ce que** les esters vinyliques à haut point d'ébullition ont un point d'ébullition de préférence ≥ 150°C sous 1 013 hPa.

4. Procédé selon les revendications 1 à 3, **caractérisé en ce qu'**on utilise comme esters vinyliques à haut point d'ébullition des esters vinyliques d'acides monocarboxyliques linéaires ayant jusqu'à 20 atomes de carbone et/ou des esters vinyliques d'acides monocarboxyliques alpha-ramifiés ayant de 5 à 20 atomes de carbone.

5. Procédé selon les revendications 1 à 4, **caractérisé en ce qu'**on utilise comme esters vinyliques à haut point d'ébullition un ou plusieurs monomères choisis dans le groupe comprenant le laurate de vinyle, le stéarate de vinyle et le néodécanoate de vinyle.

6. Procédé selon les revendications 1 à 5, **caractérisé en ce que** la teneur en monomères résiduels des copolymérisats acétate de vinyle/ester vinylique est réduite par distillation ou rectification.

7. Utilisation des produits du procédé des revendications 1 à 6, en tant que liants pour peintures, pour la production de produits de contre-collage.

8. Utilisation des produits du procédé des revendications 1 à 6, en tant que primaires pour apprêts, matières pour gomme à mâcher ou en tant qu'additif low-profile.
